## Europäisches Patentamt
## European Patent Office
## Office européen des brevets

(11) Veröffentlichungsnummer: **0 330 013 B1**

(12) **EUROPÄISCHE PATENTSCHRIFT**

(45) Veröffentlichungstag der Patentschrift: **11.11.92**

(21) Anmeldenummer: **89102161.0**

(22) Anmeldetag: **08.02.89**

(51) Int. Cl.⁵: **G21C 3/34**

(54) **Kernreaktorbrennelement.**

(30) Priorität: **22.02.88 DE 3805507**

(43) Veröffentlichungstag der Anmeldung:
**30.08.89 Patentblatt 89/35**

(45) Bekanntmachung des Hinweises auf die
Patenterteilung:
**11.11.92 Patentblatt 92/46**

(84) Benannte Vertragsstaaten:
**BE DE ES FR IT SE**

(56) Entgegenhaltungen:
**EP-A- 0 033 263**
**EP-A- 0 210 526**
**CH-A- 499 850**
**US-A- 3 801 088**

(73) Patentinhaber: **SIEMENS AKTIENGESELL-
SCHAFT**
**Wittelsbacherplatz 2**
**W-8000 München 2(DE)**

(72) Erfinder: **Lettau, Hans Dipl.-Ing. (FH)**
**Lettenfeld 14**
**W-8521 Effeltrich(DE)**
Erfinder: **Rink, Roland**
**Marktplatz 10**
**W-8742 Bad Königshofen(DE)**

## Beschreibung

Die Erfindung betrifft ein Kernreaktorbrennelement nach dem Gattungsbegriff des Patentanspruches 1.

Ein derartiges Kernreaktorbrennelement ist aus der schweizerischen Patentschrift CH-A 499 850 bekannt. Die Anlagefeder dieses bekannten Kernreaktorbrennelementes befindet sich auf der einen Seite eines Steges des Abstandhalters und ist mit beiden Streifenenden an den Streifenenden einer gleich ausgebildeten Anlagefeder befestigt, die sich auf der anderen Seite des Steges befindet. Die wellenförmige Querwölbung an den Anlagestellen der streifenförmigen Anlagefedern für den jeweiligen Stab befindet sich auf der dem Steg abgewandten Seite der betreffenden streifenförmigen Anlagefeder.

In einem Kernreaktor werden das Kernreaktorbrennelement der Länge nach und damit auch die einzelnen Maschen der Abstandhalter von einem Kühlmittel durchströmt. Der Erfindung liegt die Aufgabe zugrunde, den Strömungswiderstand für das Kühlmittel durch die einzelnen Maschen der Abstandhalter und damit auch durch das Kernreaktorbrennelement insgesamt optimal niedrig zu gestalten.

Zur Lösung dieser Aufgabe hat ein Kernreaktorbrennelement der eingangs erwähnten Art erfindungsgemäß die Merkmale des kennzeichnenden Teiles des Patentanspruches 1.

Dadurch verengt und erweitert sich der Spalt zwischen Stab und an ihm anliegende Anlagefeder für das jede einzelne Masche in Längsrichtung des Kernreaktorbrennelementes in einem Kernreaktor durchfließende Kühlmittel gleichmäßig, was insgesamt zu dem optimal geringen Strömungswiderstand des Kernreaktorbrennelementes für das Kühlmittel führt.

Der Patentanspruch 2 ist auf eine vorteilhafte Weiterbildung gerichtet.

Die Erfindung und ihre Vorteile seien anhand der Zeichnung an zwei Ausführungsbeispielen näher erläutert:

FIG 1 zeigt zum Teil im Längsschnitt eine Seitenansicht eines erfindungsgemäßen Kernreaktorbrennelementes für einen Siedewasserkernreaktor.

FIG 2 zeigt in Draufsicht einen Abstandhalter des Brennelementes nach FIG 1.

FIG 3 zeigt einen Schnitt durch die Abstandhalter entsprechend der strichpunktierten Linie 111-111 in FIG 2.

FIG 4 zeigt in perspektivischer Ansicht einen Ausschnitt aus dem Abstandhalter nach den Figuren 2 und 3.

FIG 5 zeigt einen Längsschnitt durch eine Masche des Abstandhalters nach den Figuren 2 bis 4.

FIG 6 zeigt einen Längsschnitt durch eine andere Ausführungsform der Anlagefeder für das Kernreaktorbrennelement nach FIG 1.

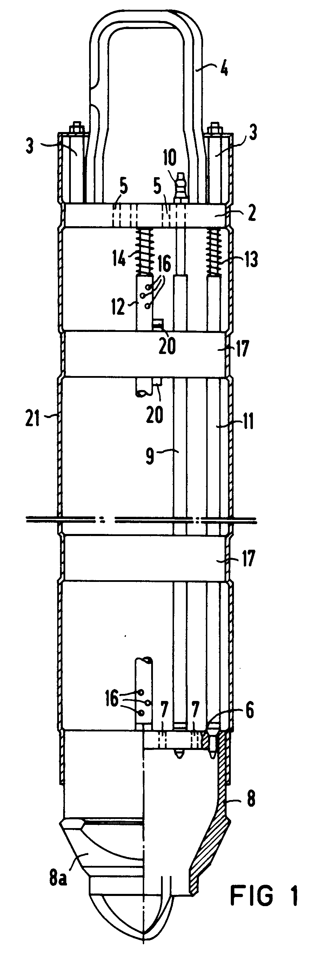

Das Kernreaktorbrennelement nach FIG 1 weist einen Brennelementkopf mit einer quadratischen Gitterplatte 2 auf, die auf der Oberseite mit zwei Stehbolzen 3 und einem Haltegriff 4 versehen ist. Die Gitterplatte 2 ist mit einer Vielzahl gestrichelt angedeuteter Strömungsdurchführungen 5 in Längsrichtung des Kernreaktorbrennelementes versehen, durch die im Reaktorkern eines Siedewasserkernreaktors das Kühlmittel hindurchströmt. Diese Gitterplatte 2 ist rechtwinklig zur Längsrichtung des Kernreaktorbrennelementes angeordnet.

Das Kernreaktorbrennelement nach FIG 1 ist ferner mit einem Brennelementfuß versehen, der ebenfalls eine rechtwinklig zur Längsrichtung des Kernreaktorbrennelementes angeordnete quadratische Gitterplatte 6 aufweist. Auch diese quadratische Gitterplatte 6 hat eine Vielzahl von gestrichelt angedeuteten Strömungsdurchführungen 7 in Längsrichtung des Kernreaktorbrennelementes für das Kühlmittel im Reaktorkern eines Siedewasser-Kernreaktors. Auf der Unterseite ist die Gitterplatte 6 des Brennelementfußes mit einem zur Gitterplatte 6 offenen Paßorgan 8 versehen, das vertikal von oben in eine Masche eines im Reaktorkern des Siedewasserkernreaktors befindlichen sogenannten Kerngitters eingesetzt wird.

Das Kernreaktorbrennelement nach FIG 1 weist ferner eine Reihe von mit Kernbrennstoff gefüllten Brennstäben 9 auf, die in die Gitterplatte 6 des Brennelementfußes eingeschraubt sind und die Gitterplatte 2 des Brennelementkopfes durchgreifen und dort mit einer an der Oberseite der Gitterplatte 2 befindlichen Mutter an der Gitterplatte 2 angeschraubt sind. Diese Brennstäbe 9 dienen als sogenannte Haltestäbe für Brennelementkopf und Brennelementfuß des Kernreaktorbrennelementes.

Weitere mit Kernbrennstoff gefüllte Brennstäbe 11 und ein zentraler Wasserstab 12 sind mit ihren Enden lose in Durchführungen in den Gitterplatten 2 und 6 des Brennelementkopfes und Brennelementfußes des Kernreaktorbrennelementes eingesetzt.

Auf den Oberenden der Brennstäbe 11 und des Wasserstabes 12 sitzen als Schraubenfedern ausgebildete Niederhaltefedern 13 und l4, die Druckfedern sind und sich jeweils am Brennstab 11 bzw. am Wasserstab 12 einerseits und an der Unterseite der Gitterplatte 2 des Brennelementkopfes andererseits abstützen.

Bei dem zentralen Wasserstab 12 handelt es sich um ein Rohr aus einer Zirkoniumlegierung, das an beiden Enden verschlossen ist. An den Enden dieses Wasserstabes 12 sind radiale Durchtrittsöffnungen 16 im Mantel des Rohres für Flüssigwasser vorgesehen.

Das Kernreaktorbrennelement nach FIG 1 weist ferner zwischen dem Brennelementkopf und dem Brennelementfuß mehrere Abstandhalter 17 auf, die in Längsrichtung des Kernreaktorbrennelementes Abstand voneinander und vom Brennelementkopf bzw. Brennelementfuß haben. Diese Abstandhalter 17 sind quadratisch, fluchten mit der Gitterplatte 2 des Brennelementkopfes und der Gitterplatte 6 des Brennelementfußes und bestehen aus einem Gitter sich rechtwinklig durchsetzender, hochkant angeordneter Blechstege aus einer Zirkoniumlegierung. In den Maschen 33 bzw. 36 dieser Abstandhalter 17 ist jeweils einer der Brennstäbe 9 bzw. 11 oder der Wasserstab 12 angeordnet. Jeder der Abstandhalter 17 ist zwischen zwei Flügeln 20 positioniert, die sich außen an der Mantelfläche des Wasserstabes 12 mit entsprechendem Abstand voneinander in Längsrichtung des Wasserstabes 12 und damit auch des Kernreaktorbrennelementes befinden und die miteinander fluchten.

Dem Kernreaktorbrennelement nach FIG 1 ist ferner ein Hüllkasten 21 mit quadratischem Querschnitt, der sogenannte Brennelementkasten, ebenfalls aus einer Zirkoniumlegierung zugeordnet, der außen auf den Brennelementkopf, die Abstandhalter 17 und den Brennelementfuß aufgesetzt ist und die Brennstäbe 9 und 11 sowie den Wasserstab 12 unter Ausbildung eines Strömungskanals für das Kühlmittel im Reaktorkern eines Siedewasserkernreaktors umhüllt.

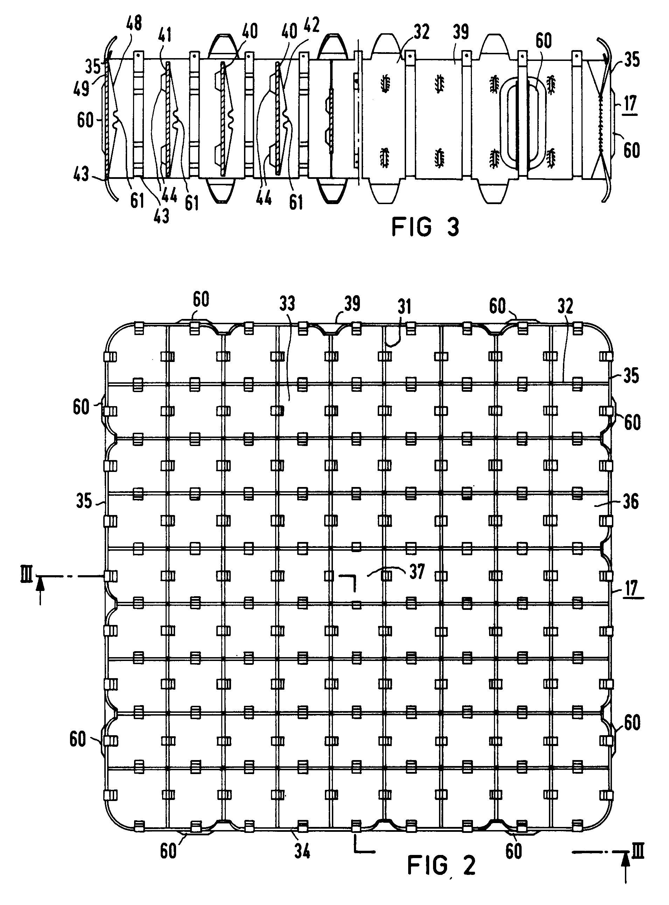

Wie die Figuren 2 bis 5 zeigen, weist der quadratische Abstandhalter 17 eine erste Gruppe von zueinander parallelen Innenstegen 31 und eine zweite Gruppe zueinander paralleler Innenstege 32 aus Blech auf. Die Innenstege 31 und 32 beider Gruppen durchsetzen sich rechtwinklig unter Ausbildung von 9x9 quadratischen Maschen 33. Sowohl die Innenstege 31 als auch die zu diesen Innenstegen 31 rechtwinkligen Innenstege 32 sind hochkant angeordnet, d.h. ihre Seitenflächen sind parallel zur Längsrichtung des Kernreaktorbrennelementes nach FIG 1. Die Innenstege 31 und 32 sind umschlossen von hochkant angeordneten Außenstegen 34 und 35 aus Blech, von denen die Außenstege 35 zu den Innenstegen 31 und die Außenstege 34 zu den Innenstegen 32 parallel sind. Die Außenstege 34 und 35 sind auf der Außenseite mit je zwei nach außen gerichteten Anlagenoppen 60 für den Hüllkasten 21 versehen.

Jeder der inneren Maschen 33 sind vier Anlageelemente 40 zugeordnet. Ein Anlageelement besteht aus einem Blechstreifen aus einer Nickelbasislegierung, der zu einer haarnadelartigen Klammer mit zwei Schenkeln 41 und 42 gebogen ist, die mit diesen Schenkeln 41 und 42 einen einzigen Innensteg 31 oder 32 des Abstandhalters 17 in der Mitte einer Seite der Masche 33 auf beiden Seiten umfäßt. Die beiden Enden des Blechstreifens und damit die Enden der Schenkel 41 und 42 sind durch Punktschweißen starr miteinander verbunden. In der Mitte jeder Seite der inneren Maschen 33 ist der betreffende Innensteg 31 bzw. 32 an der Unterkante mit einer Rastkerbe 43 zur Aufnahme der Biegestelle des das Anlageelement 40 bildenden Blechstreifens versehen. Ein Schenkel 41 des Anlageelementes 40 liegt an dem betreffenden Innensteg 31 bzw. 32 satt an, während dar andere Schenkel 42 auf der anderen Seite des Innensteges nach außen unter Ausbildung einer streifenförmigen, zu einem in der betreffenden inneren Masche 33 befindlichen Brennstab 9 oder 11 parallelen streifenförmigen Anlagefeder gewölbt ist. Die durch den Schenkel 42 gebildete Anlagefeder liegt also mit beiden Streifenenden am Innensteg 31 bzw. 32 an und ist dort auch an diesem Innensteg 31 bzw. 32 gehaltert. In der Mitte des die Anlagefeder bildenden Schenkels 42 befinden sich an einer über dem Innensteg 31 bzw. 32 federnden Anlagestelle für den Brennstab 9 oder 11 in der betreffenden inneren Masche 33 zwei wellenförmige Querwölbungen 61. Diese beiden Querwölbungen 61 sind auf der Seite der Anlagefeder angeordnet, die dem Innensteg 31 bzw. 32 zugewandt ist, an dem diese Anlagefeder gehaltert ist. Die durch den Schenkel 42 gebildete Anlagefeder ist sonst ausgehend von der über den betreffenden Innensteg 31 bzw. 32 federnden, mit den wellenförmigen Querwölbungen 61 versehenen Anlagestelle für den Brennstab 9 oder 11 bis hin zu ihren an diesem Innensteg 31 bzw. 32 anliegenden Streifenenden durchgehend glatt und flach. Der satt an der anderen flachen Seite des Innensteges 31 bzw. 32 anliegende Schenkel 41 des Anlageelementes 40 ist mit zwei örtlichen Querwölbungen 44 nach außen versehen, die starre Anlagenoppen für den in der betreffenden inneren Masche 33 befindlichen Brennstab 9 oder 11 bilden. Das Anlageelement auf der gegenüberliegenden Seite dieser inneren Masche 33 hat dort einen als nach außen gewölbte Anlagefeder ausgebildeten Schenkel 42, so daß in jeder inneren Masche 33 zwischen zwei zueinander parallelen Innenstegen 31 bzw. 32 jeweils eine Dreipunktlagerung für den in der betreffenden inneren Masche 33 angeordneten Brennstab 9 oder 11 gewährleistet ist.

Auch die Außenstege 34 und 35 des Abstandhalters 17 weisen jeweils in der Mitte der Seiten der dort befindlichen äußeren Maschen 36 in Rastkerben 43 an ihrem Unterkanten positionierte Anlageelemente 47 auf, die wie die Anlageelemente 40 aus einem Blechstreifen zu einer Klammer gebogen sind. Wie beim Anlageelement 40 sind auch die Enden dieses Blechstreifens durch eine Punktschweißung starrer miteinander verbunden. Von diesen Anlageelementen 47 ist jedoch nur der in den äußeren Maschen 36 befindliche Schenkel 48 unter Ausbildung einer Anlagefeder mit über dem Außensteg 34 bzw. 35 federnder Anlagestelle für einen Brennstab 9 oder 11 nach außen gewölbt, während der auf der Außenseite der Außenstege 34 bzw. 35 befindliche Schenkel 49 des Anlageelementes 47 durchgehend flach ist und flach und weitgehend satt an der Außenseite des Außensteges 34 bzw. 35 anliegt. Wie beim Anlageelement 40 hat die durch den Schenkel 48 gebildete Anlagefeder an der über dem Außensteg 34 bzw. 35 federnden Anlagefläche für einen Brennstab 9 oder 11 zwei wellenförmige Querwölbungen 61. Diese wellenförmigen Querwölbungen 61 befinden sich auf der Seite der Anlagefeder, die dem Außensteg 34 bzw. 35 zugewandt ist, an dem diese Anlagefeder gehalten ist. Wie beim Anlageelement 40 liegt diese Anlagefeder an ihren Streifenenden am Außensteg 34 bzw. 35 an und ist ausgehend von ihrer über dem Außensteg 34 bzw. 35 federnden Anlagestelle für den Stab 9 oder 11 bis hin zu ihren am Außensteg 34 bzw. 35 anliegenden Streifenenden durchgehend glatt und flach.

In einer zentralen inneren Masche 37 des Abstandhalters 17 für den Wasserstab 12 sind in den Innenstegen 31 und 32 jeweils in der Mitte der Seite der inneren Masche 37 zwei in Längsrichtung des Wasserstabes 12 und damit in Längsrichtung des Kernreaktorbrennelementes mit Abstand nebeneinander angeordnete Durchführungen 38 und 39 für ein Anlageelement 50 vorgesehen. Dieses Anlageelement 50 besteht ebenfalls aus einem Blechstreifen aus einer Nickelbasislegierung, der durch eine der Durchführungen 38 und 39 eingefädelt und zu einer Klammer mit zwei Schenkeln 51 und 52 gebogen ist und dessen Enden in der anderen der Durchführungen 38 und 39 durch Punktschweißen starr miteinander verbunden sind. Alle in der zentralen inneren Masche 37 befindlichen Schenkel 51 der Anlageelemente 50 sind unter Ausbildung einer Anlagefeder für den Wasserstab 12 nach außen gewölbt, während die anderen Schenkel 52 satt an den betreffenden Innenstegen 31 bzw. 32 anliegen und zwei Querwölbungen 53 als starre Anlagenoppen für Brennstäbe 9 bzw. 11 in benachbarten inneren Maschen 33 haben.

Im Reaktorkern eines Siedewasserkernreaktors ist das Brennelement nach FIG 1 vertikal mit oben befindlichem Brennelementkopf angeordnet. In diesem Reaktorkern strömt Flüssigwasser von unten durch den Brennelementfuß in das mit dem Hüllkasten 21 versehene Kernreaktorbrennelement und verdampft dort, so daß durch den Brennelementkopf Wasserdampf nach oben ausströmt. Zur Verbesserung der Moderation durchströmt am Unterende durch die dort befindlichen Durchführungen 16 in den Wasserstab 12 eingetretenes Flüssigwasser ohne zu verdampfen den Wasserstab 12 und tritt in flüssiger Form durch die Durchführungen 16 am Oberende des Wasserstabes wieder aus und verdampft erst dort in dem vorbeiströmenden Wasserdampf.

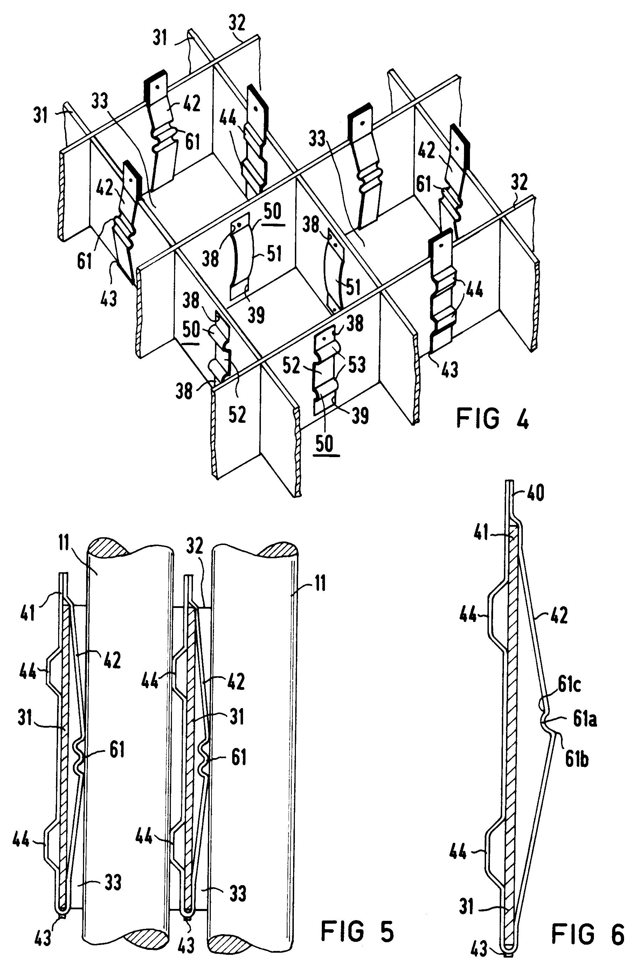

Wie besonders FIG 5 verdeutlicht, verengt sich der Spalt zwischen dem die Anlagefeder bildenden Schenkel 42 und dem in einer Masche 33 befindlichen Brennstab 11 für ein von unten nach oben durch die Masche 33 fließendes Kühlmittel zunächst gleichmäßig, um sich dann auch wieder gleichmäßig zu erweitern, so daß der Strömungswiderstand in dieser Masche 33 optimal gering ist.

Das Anlageelement nach FIG 6, in der gleiche Teile mit den gleichen Bezugszeichen wie in den Figuren 2 bis 5 versehen sind, unterscheidet sich vom Anlageelement 40 nach diesen Figuren 2 bis 5 nur dadurch, daß an der Anlagestelle für einen Stab der durch den Schenkel 42 gebildeten Anlagefeder nur eine einzige wellenförmige Querwölbung 61a vorgesehen ist. Diese Anlagefeder ist besonders strömungsfreundlich, wenn die Übergangsstellen 61b und 61c des die Anlagefeder bildenden Schenkels 42 in diese wellenförmige Querwölbung 61a unterschiedlichen Abstand von dem Steg 31 haben, an dem das Anlageelement 40 angebracht und damit die durch den Schenkel 42 gebildete Anlagefeder gehaltert ist. Besonders günstig ist es, wenn die dem Brennelementfuß des Kernreaktorbrennelementes näher befindliche Übergangsstelle 61b größeren Abstand vom Steg 31 hat als die andere, dem Brennelementkopf näher befindliche Übergangsstelle 61c.

**Patentansprüche**

1. Kernreaktorbrennelement mit zueinander parallelen, Kernbrennstoff enthaltenden Brennstäben (9, 11) sowie mit mindestens einem Abstandhalter, der ein Gitter aus sich durchsetzenden, hochkant angeordneten Blechstegen (31, 32) mit Maschen (36) aufweist, in denen jeweils ein Stab, insbesondere einer der Brennstäbe, angeordnet ist und in denen eine streifenförmige, zum Stab parallele Anlagefeder (40) mit beiden Streifenenden an einem Steg des Abstandhalters anliegt und gehaltert ist, die eine über diesem Steg federnde Anlagestelle für den Stab mit Abstand von beiden Streifenenden hat, sowie eine wellenförmige Querwölbung (61) aufweist, die sich an der Anlagestelle für den Stab befindet, während die Anlagefeder ausgehend von dieser Anlagestelle bis hin zu den am Steg anliegenden Streifenenden durchgehend glatt und flach ist, **dadurch gekennzeichnet,** daß sich die wellenförmige Querwölbung (61) auf der Seite der Anlagefeder (42) befindet, die dem Steg (31, 32, 34, 35) des Abstandhalters (17) zugewandt ist, an dem diese Anlagefeder (42) gehaltert ist.

2. Kernreaktorbrennelement nach Anspruch 1, **dadurch gekennzeichnet,** daß eine einzige wellenförmige Querwölbung (61a) an der Anlagestelle für den Stab (9, 11) vorhanden ist mit Übergangsstellen (61b, 61c) der Anlagefeder (42) in diese wellenförmige Querwölbung (61a), die unterschiedlichen Abstand von dem Steg (31, 32, 34, 35) haben, an dem die Anlagefeder (42) gehaltert ist.

## Claims

1. A nuclear reactor fuel assembly with fuel rods (9,11), parallel to each other and containing nuclear fuel, as well as with at least one spacer, which has a grid of intersecting sheet-metal struts (31,32), arranged upright, with meshes (36), in which in each case one rod, in particular one of the fuel rods, is arranged and in which a strip-shaped contact spring (40), parallel to the rod, rests and is held with both strip ends on one strut of the spacer, which spring has a resilient contact point above the strut for the rod spaced from both strip ends, as well as a wave-like transverse curve (61), which is located at the contact point for the rod, whilst the contact spring is continuously smooth and flat from this contact point to the strip ends resting on the strut, characterised in that the wave-like transverse curve (61) is located on the side of the contact spring (42), which faces the strut (31,32,34,35) of the spacer (17) on which this contact spring (42) is held.

2. A nuclear reactor fuel assembly, characterised in that a single wave-like transverse curve (61a) is present at the contact point for the rod (9,11) with transfer points (61b, 61c) of the contact spring (42) into this wave-like transverse curve (61a) which are differently spaced from the strut (31, 32, 34, 35), on which the contact spring (42) is held.

## Revendications

1. Assemblage combustible de réacteur nucléaire, comprenant des crayons combustibles (9, 11) parallèles et contenant de la matière combustible nucléaire, ainsi qu'au moins une entretoise, qui comporte une grille constituée de barrettes de tôle (31, 32) se croisant, disposées sur chant et formant des mailles (36) dans chacune desquelles passe un crayon, notamment l'un des crayons combustibles, et dans lesquelles un ressort d'appui (40), parallèle au crayon et en forme de bande, s'applique à une barrette de l'entretoise et y est maintenu par les deux extrémités de la bande, ce ressort ayant, par l'intermédiaire de cette barrette, un point d'appui élastique pour le crayon à distance des deux extrémités de la bande et présentant une partie incurvée transversale (61) de forme ondulée, qui se trouve au point d'appui du crayon, alors que, de ce point d'appui aux extrémités de la bande s'appliquant à la barrette, le ressort d'appui est lisse et plat tout du long, caractérisé, en ce que la partie incurvée transversale (61) de forme ondulée se trouve du côté du ressort d'appui (42) qui est tourné vers la barrette (31, 32, 34, 35) de l'entretoise (17), sur laquelle est maintenu ce ressort d'appui (42).

2. Assemblage combustible de réacteur nucléaire suivant la revendication 1, caractérisé, en ce qu'il est prévu une seule partie incurvée transversale (61a) de forme ondulée au point d'appui du crayon (9, 11), avec des points de transition (61b, 61c) du ressort d'appui (42) en cette partie incurvée transversale (61a) de forme ondulée, qui sont à des distances différentes de la barrette (31, 32, 34, 35) sur laquelle est maintenu le ressort d'appui (42).

FIG 1

FIG 3

FIG 2

FIG 4

FIG 5

FIG 6